# EUROPEAN PATENT APPLICATION

(11) **EP 4 517 677 A1**
(43) Date of publication of application: **05.03.2025**
(21) Application number: 23796104.0
(22) Date of filing: 12.04.2023
(51) Int. Cl.: G06T 15/50

(54) **GLASS COMPATIBILITY DETERMINATION DEVICE, GLASS COMPATIBILITY DETERMINATION METHOD, AND PROGRAM**

(30) Priority: 25.04.2022 JP 2022071546
(71) Applicant: AGC INC., Chiyoda-ku, Tokyo 1008405 (JP)
(72) Inventor: UEMURA Ken, Tokyo 100-8405 (JP)
(74) Representative: Müller-Boré & Partner Patentanwälte PartG mbB
(86) International application number: PCT/JP2023/014794
(87) International publication number: WO 2023/210360

(57) **Abstract**

To provide a glass matching determination device that can determine whether the color of vision glass and that of spandrel glass match each other before the construction of a building. There is provided a glass matching determination device including a condition setter, a CG image generator, and a determiner. The condition setter sets an external condition to be used for generating each of multiple target computer graphics (CG) images of a building including vision glass and spandrel glass. The multiple target CG images are used for determining whether the vision glass and the spandrel glass match each other. The CG image generator generates the multiple target CG images. The determiner determines, based on a color difference between the vision glass and the spandrel glass in each of the multiple target CG images, whether a combination of the vision glass and the spandrel glass is suitable. The external condition for a first target CG image is set so that the vision glass and the spandrel glass in the first target CG image are exposed to direct sunlight. The external condition for a second target CG image is set so that the vision glass and the spandrel glass in the second target CG image are not exposed to direct sunlight.

## Description

### TECHNICAL FIELD

The present invention relates to a glass matching determination device, a glass matching determination method, and a program.

### BACKGROUND ART

In a building using glass curtain walls, window glass (vision glass) and spandrel glass that hides structures, such as the floors and ceilings, are used as the outer walls. To perform color matching of the vision glass and the spandrel glass, small samples of the vision glass and the spandrel glass are compared with each other and mock-ups of the outer walls are created.

A technique for generating computer graphics (CG) images of glass using the bidirectional reflectance distribution function (hereinafter also called BRDF) of the glass is disclosed (see Patent Document 1, for example).

### PRIOR ART DOCUMENTS

### PATENT DOCUMENTS

Patent Document 1: WO2021/190986

### DISCLOSURE OF INVENTION

### TECHNICAL PROBLEM

Before a building is constructed, vision glass and spandrel glass can be selected based on small samples and mock-ups. There may be a case in which, however, after the building is constructed, the color of the vision glass and that of the spandrel glass of the actual building look different from those in the small samples and mock-ups depending on the conditions, and they do not match each other.

The present invention has been made in view of this background. The invention provides a glass matching determination device, a glass matching determination method, a program, and a recording medium that can determine whether the color of vision glass and that of spandrel glass match each other before the construction of a building.

### SOLUTION TO PROBLEM

The present invention has been made to solve the above-described problem. According to an aspect of the invention, there is provided a glass matching determination device including a condition setter, a CG image generator, and a determiner. The condition setter sets an external condition to be used for generating each of multiple target computer graphics (CG) images of a building including vision glass and spandrel glass. The multiple target CG images are used for determining whether the vision glass and the spandrel glass match each other. The CG image generator generates the multiple target CG images. The determiner determines, based on a color difference between the vision glass and the spandrel glass in each of the multiple target CG images, whether a combination of the vision glass and the spandrel glass is suitable. The multiple target CG images include a first target CG image and a second target CG image. The external condition for the first target CG image is set so that the vision glass and the spandrel glass in the first target CG image are exposed to direct sunlight. The external condition for the second target CG image is set so that the vision glass and the spandrel glass in the second target CG image are not exposed to direct sunlight.

According to another aspect of the invention, in the above-described glass matching determination device, the external condition for the second target CG image is set so that the vision glass and the spandrel glass in the second target CG image are not exposed to direct sunlight due to cloudy weather. The multiple target CG images further include a third target CG image. The external condition for the third target CG image is set so that weather is sunny and the vision glass and the spandrel glass in the third target CG image are not exposed to direct sunlight.

According to another aspect of the invention, in the above-described glass matching determination device, the external condition includes time, season, date, or weather. The condition setter sets the time, season, date, or weather to be included in the external condition in accordance with a latitude or a region where the building will be or is being constructed.

According to another aspect of the invention, in the above-described glass matching determination device, the CG image generator includes a ray tracing processor that generates multiple CG images of the building by using ray tracing, and a synthesizer that synthesizes, by using the multiple CG images, the multiple target CG images corresponding to transmittance and reflectance of selected vision glass and corresponding to transmittance and reflectance of selected spandrel glass. The multiple CG images include at least two CG images. The transmittance of the vision glass or the spandrel glass in each of the at least two CG images is different from the transmittance of the vision glass or the spandrel glass in another one of the at least two CG images. The multiple CG images include at least two CG images. The reflectance of the vision glass or the spandrel glass in each of the at least two CG images is different from the reflectance of the vision glass or the spandrel glass in another one of the at least two CG images.

According to another aspect of the invention, there is provided a glass matching determination method used by a glass matching determination device. The glass matching determination method includes: setting an external condition to be used for generating each of multiple target computer graphics (CG) images of a building including vision glass and spandrel glass, the multiple target CG images being used for determining whether the vision glass and the spandrel glass match each other; generating the multiple target CG images; and determining, based on a color difference between the vision glass and the spandrel glass in each of the multiple target CG images, whether a combination of the vision glass and the spandrel glass is suitable. The multiple target CG images include a first target CG image and a second target CG image. The external condition for the first target CG image is set so that the vision glass and the spandrel glass in the first target CG image are exposed to direct sunlight. The external condition for the second target CG image is set so that the vision glass and the spandrel glass in the second target CG image are not exposed to direct sunlight.

According to another aspect of the invention, there is provided a program causing a computer to function as: a condition setter that sets an external condition to be used for generating each of multiple target computer graphics (CG) images of a building including vision glass and spandrel glass, the multiple target CG images being used for determining whether the vision glass and the spandrel glass match each other; a CG image generator that generates the multiple target CG images; and a determiner that determines, based on a color difference between the vision glass and the spandrel glass in each of the multiple target CG images, whether a combination of the vision glass and the spandrel glass is suitable. The multiple target CG images include a first target CG image and a second target CG image. The external condition for the first target CG image is set so that the vision glass and the spandrel glass in the first target CG image are exposed to direct sunlight. The external condition for the second target CG image is set so that the vision glass and the spandrel glass in the second target CG image are not exposed to direct sunlight.

According to another aspect of the invention, there is provided a computer-readable recording medium storing the above-described program.

### ADVANTAGEOUS EFFECTS OF INVENTION

According to this invention, it is possible to determine whether the color of vision glass and that of spandrel glass match each other before the construction of a building.

### BRIEF DESCRIPTION OF DRAWINGS

[Fig. 1] Fig. 1 is a schematic block diagram illustrating the configuration of a glass matching determination device 100 according to an embodiment of the invention.
[Fig. 2] Fig. 2 is a flowchart illustrating an operation of the glass matching determination device 100 in the embodiment.
[Fig. 3] Fig. 3 is a flowchart illustrating setting processing for external conditions executed by a condition setter 101 in the embodiment.
[Fig. 4] Fig. 4 is a schematic view illustrating an example of a setting screen for setting external conditions by the condition setter 101 in the embodiment.
[Fig. 5] Fig. 5 is a flowchart illustrating generation processing for element CG images executed by a ray tracing processor 131 in the embodiment.
[Fig. 6] Fig. 6 is a graph illustrating candidates of the reflectance and the transmittance for element CG images in the embodiment.
[Fig. 7] Fig. 7 is a schematic view illustrating an example of a glass setting screen in the embodiment.
[Fig. 8] Fig. 8 is a flowchart illustrating target CG image synthesizing processing executed by a synthesizer 133 in the embodiment.
[Fig. 9] Fig. 9 is a flowchart illustrating color difference suitability determining processing executed by a determiner 104 in the embodiment.

### DESCRIPTION OF EMBODIMENTS

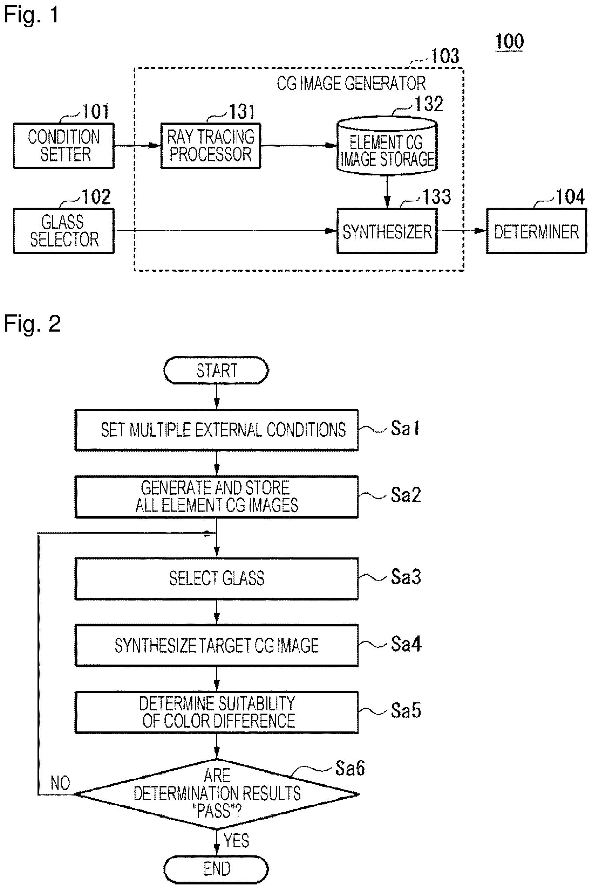

An embodiment of the present invention will be described below with reference to the drawings. Fig. 1 is a schematic block diagram illustrating the configuration of a glass matching determination device 100 according to an embodiment of the invention. The glass matching determination device 100 creates a CG image (target CG image used for determining glass matching, which will be hereinafter simply called a target CG image) of a building including vision glass and spandrel glass and calculates a color difference between the vision glass and the spandrel glass in the created CG image so as to determine whether a combination of the vision glass and the spandrel glass is suitable. The glass matching determination device 100 is implemented as a result of a computer, such as a personal computer, a tablet terminal, and a smartphone, executing an application. The glass matching determination device 100 may be implemented by one computer or multiple computers.

As illustrated in Fig. 1, the glass matching determination device 100 includes a condition setter 101, a glass selector 102, a CG image generator 103, and a determiner 104.

The condition setter 101 sets an external condition to be used when generating each of multiple target CG images of a building including vision glass and spandrel glass. Components of the external condition for a building include at least one of the construction site, date, season, time, weather, and viewpoint. One external condition is set so that the vision glass and the spandrel glass in a target CG image are exposed to direct sunlight. Another one external condition is set so that the vision glass and the spandrel glass in a target CG image are not exposed to direct sunlight.

As the viewpoint, which is one of the components of the external condition, a certain height, direction, and the like, may be set by considering other components of external condition, and typically, the position of a viewpoint of a pedestrian looking up at the building is used.

When glass is examined by comparing the condition that the glass is exposed to direct sunlight, the condition that the glass is not exposed to direct sunlight, and the condition that the glass is in cloudy weather with each other, especially by using the condition that the glass is exposed to direct sunlight, it is preferable that at least one of the following conditions 1 to 3 be satisfied. In the following conditions, it is assumed that the glass is fixed to a side surface of the building, and the glass is examined on the precondition that the side surface of the building is perpendicular to the ground. The eye direction from the viewpoint position is preferably a diagonally upward direction. The surface reflectance of glass may become higher depending on the viewing angle. The eye direction is thus preferably an upward direction at an angle of 45 degrees or smaller with respect to the ground.

Condition 1: regarding the condition that glass is exposed to direct sunlight, it is preferable that, when the glass is seen from the viewpoint, a reflected image of the sun be not shown on the glass surface and the sky near the sun having high luminance be shown on the glass surface.

Condition 2: the angle between the direction perpendicular to the glass surface and the direction of the sun is preferably 30 degrees or smaller. With the condition that the angle is 30 degrees or smaller, a decrease in the luminance of sunlight incident on a spandrel panel can be regulated, so that glass can be examined appropriately.

Condition 3: for example, in regions having latitudes similar to those of Japan, seasons such as the fall, winter, and spring when the position of the sun is low are preferable to examine glass facing the south. Regarding glass facing the east and glass facing the west, it is preferable to examine glass facing the east in the morning or to examine glass facing the west in the early evening. In high latitude regions, for example, glass facing the south can be examined all the year round. In low latitude regions, it is preferable to examine glass facing the east in the morning or to examine glass facing the west in the early evening throughout the year.

The glass selector 102 selects a combination of glass to be used as vision glass and glass to be used as spandrel glass.

The CG image generator 103 generates a target CG image corresponding to each of the multiple external conditions set by the condition setter 101. These target CG images are CG images for the building using the vision glass and the spandrel glass selected by the glass selector 102. The determiner 104 determines the suitability of a combination of the vision glass and the spandrel glass of the building, based on the color difference between the vision glass and the spandrel glass in each of the multiple target CG images.

The CG image generator 103 includes a ray tracing processor 131, an element CG image storage 132, and a synthesizer 133. The ray tracing processor 131 generates multiple CG images of a building including vision glass and spandrel glass by using ray tracing, such as Monte Carlo ray tracing and photon mapping. The ray tracing processor 131 generates multiple CG images for each of the external conditions set by the condition setter 101. The multiple CG images include two CG images (first and second CG images), differing in the reflectance of the vision glass or the spandrel glass. The multiple CG images also include two CG images (third and fourth CG images), differing in the transmittance of the vision glass or the spandrel glass. One or both of the first and second CG images may be the same as one or both of the third and fourth CG images. For example, the first CG image and the third CG image may be the same image, the first CG image and the second CG image may differ in the reflectance of the vision glass, while the third CG image, which is also the first CG image, and the fourth CG image, may differ in the transmittance of the vision glass.

The ray tracing processor 131 sets the transmittance and the reflectance of the vision glass and the spandrel glass in one of the generated CG images to 0 and sets this CG image to be the element CG image having a reflectance of 0 and a transmittance of 0. The ray tracing processor 131 sets the difference between each of the other CG images and the element CG image having a reflectance of 0 and a transmittance of 0 to be an element CG image. The element CG image storage 132 stores the element CG images generated by the ray tracing processor 131. For each external condition, by using the multiple element CG images for a corresponding external condition, the synthesizer 133 synthesizes a CG image corresponding to the transmittance and the reflectance of each of the vision glass and the spandrel glass selected by the glass selector 102 and sets the synthesized CG image to be a target CG image.

Fig. 2 is a flowchart illustrating the operation of the glass matching determination device 100 of the embodiment. First, the condition setter 101 sets multiple external conditions (step Sa1). For example, the condition setter 101 receives external conditions selected by an operator from preset external conditions and sets these external conditions. Then, the ray tracing processor 131 generates all element CG images corresponding to each of the multiple external conditions set in step Sa1 and the images are stored in the element CG image storage 132 (step Sa2).

Then, the glass selector 102 selects glass to be used as vision glass and that as spandrel glass (step Sa3). For example, the glass selector 102 selects a certain type of glass to be used as vision glass and a certain type of glass to be used as spandrel glass selected by the operator from preset types of glass. Then, for each of the multiple external conditions set in step Sa1, the synthesizer 133 synthesizes a target CG image corresponding to the glass selected in step Sa3 (step Sa4). Then, for each of the multiple target CG images synthesized in step Sa4, the determiner 104 determines the suitability of the color difference between the vision glass and the spandrel glass (step Sa5). For example, the determiner 104 may compare the color difference of a target CG image with a preset threshold and, if the color difference is smaller than or equal to the threshold, the determiner 104 may determine that the result of this target CG image is "pass", and if the color difference exceeds the threshold, the determiner 104 may determine that the result of this target CG image is "fail". If the determination results are "pass" (YES in step Sa6), the processing is completed. In this case, the target CG images which have passed may be displayed. If the determination results are not "pass" (NO in step Sa6), the process returns to step Sa3 and the glass selector 102 selects another type of glass.

In step Sa3, the operator selects one combination of vision glass and spandrel glass. However, the operator may select vision glass and spandrel glass differently. For instance, multiple combinations or all the possible combinations may be set, and a preset number of target CG images whose color differences are found to be smaller compared with the other CG images in step Sa5 may be sequentially displayed as target CG images which have passed.

If only one combination of vision glass and spandrel glass is selected, the material, color, and surface texture of a spandrel panel, which is typically installed on the inner side of spandrel glass (inner side of the building), may also be considered. The spandrel panel is typically located between floors of a building and may thus be treated as the wall of the building.

In one example, materials, colors, and surface textures of the spandrel panel may be prepared, and the operator may select a desired material, color, and surface texture of the spandrel panel, so that a more suitable spandrel glass option can be selected. The material, color, and surface texture of the spandrel panel are selected from preset materials, colors, and surface textures in a list. Alternatively, the operator may input a desired material, color, and surface texture using a keyboard.

When determining the suitability of the color difference between vision glass and spandrel glass, the precision of the determination result can be enhanced if a combination of the material, color, and surface texture of the spandrel panel, for example, is selected as an external condition.

A combination of the material and the color of a spandrel panel influences certain factors, such as the diffuse reflection color of light, the degree of specular reflection, and surface texture. Hence, the bidirectional reflectance distribution function (BRDF) can be used to determine the suitability of the color difference.

As the measurement for the BRDF, for example, light intensity may be measured by varying the position of each of a light source and a sensor. As the BRDF measurement device, Mini-Diff (made by Synopsys, Inc.) may, for example, be used.

Depending on a selected combination of the material, color, and surface texture of the spandrel panel, variations in the degree of matching between vision glass and spandrel glass can be regulated when the vision glass and the spandrel glass are examined by using the condition with direct sunlight, the condition without direct sunlight, and the condition of cloudy weather. For example, concerning the direction of the angle of incidence of sunlight onto the spandrel panel and that of the angle of sunlight reflected by the spandrel panel, as the reflectance of the spandrel panel determined by the BRDF corresponding to each of the angle of incidence of sunlight and the angle of sunlight reflected by the spandrel panel is lower, variations in the determination results of the degree of matching between vision glass and spandrel glass in response to a change in the intensity of sunlight may become smaller.

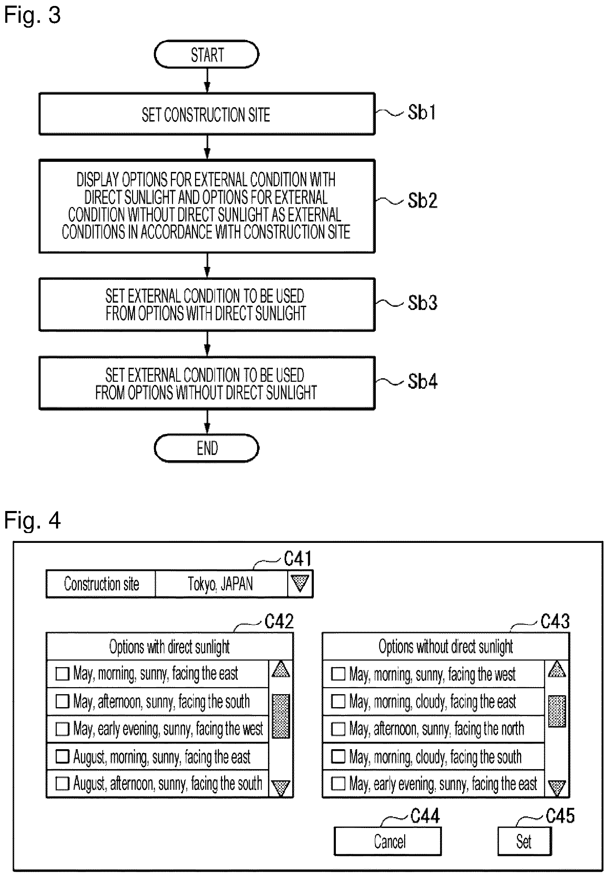

Fig. 3 is a flowchart illustrating setting processing for external conditions executed by the condition setter 101 in the embodiment. The flowchart of Fig. 3 corresponds to step Sa1 in Fig. 2. First, the condition setter 101 sets a construction site of a building by a region where the building will be or is being constructed (step Sb1). For example, the construction site may be set by an operator selecting one of preset countries or regions or by the operator inputting the address, latitude, and longitude. The construction site may be determined only by the latitude of a location where the building will be or is being constructed.

Then, the condition setter 101 displays options for the external condition with direct sunlight and those for the external condition without direct sunlight in accordance with the construction site set in step Sb1 (step Sb2). Options for the external condition with direct sunlight are options for the condition that at least part of vision glass and at least part of spandrel glass are exposed to direct sunlight. Options for the external condition without direct sunlight are options for the condition that at least part of vision glass and at least part of spandrel glass are not exposed to direct sunlight. The condition setter 101 then sets an option selected by the operator from the displayed options with direct sunlight as an external condition to be used (step Sb3). The condition setter 101 then sets an option selected by the operator from the displayed options without direct sunlight as an external condition to be used (step Sb4).

As described above, the external conditions set by the condition setter 101 include the condition that vision glass and spandrel glass are exposed to direct sunlight and the condition that vision glass and spandrel glass are not exposed to direct sunlight. The color tone of vision glass and that of spandrel glass become significantly different depending on whether or not they are exposed to direct sunlight. By including the external condition with direct sunlight and that without direct sunlight, it is possible to select a combination of vision glass and spandrel glass that can achieve color matching therebetween in both situations where they are exposed to direct sunlight and where they are not exposed to direct sunlight.

Fig. 4 is a schematic view illustrating an example of a setting screen for setting external conditions by the condition setter 101 in the embodiment. An input region C41 is a region for a construction site. In the example in Fig. 4, the input region C41 has a list format from which the operator can select one of the preset options. Alternatively, the input region C41 may be a region where the operator can input an option using a keyboard or where the operator can specify a certain point or region on a map. A list C42 is a list of options for the external condition with direct sunlight. A list C43 is a list of options for the external condition without direct sunlight. Each option in the lists C42 and C43 has a checkbox. The operator checks a certain checkbox to select the corresponding option as an external condition to be used. A button C44 is a cancel button, and a button C45 is a setting button.

When the button C45, which is the setting button, is pressed, options checked in the corresponding checkboxes among the options in the lists C42 and C43 are set as the external conditions to be used. It may be possible to check whether the checkbox of at least one option in the list C42 and that of at least one option in the list C43 are checked when the button C45 is pressed. This makes it possible to positively include the condition with direct sunlight and the condition without direct sunlight as external conditions to be used.

In one example, the options to be displayed in the lists C42 and C43 may be changed in accordance with the construction site specified in the input region C41. In another example, the provision of the lists C42 and C43 may be omitted, and external conditions may be determined when a construction site is input into the input region C41. In these examples, external conditions can be set in accordance with the climate and the culture of a region where a construction stie is located.

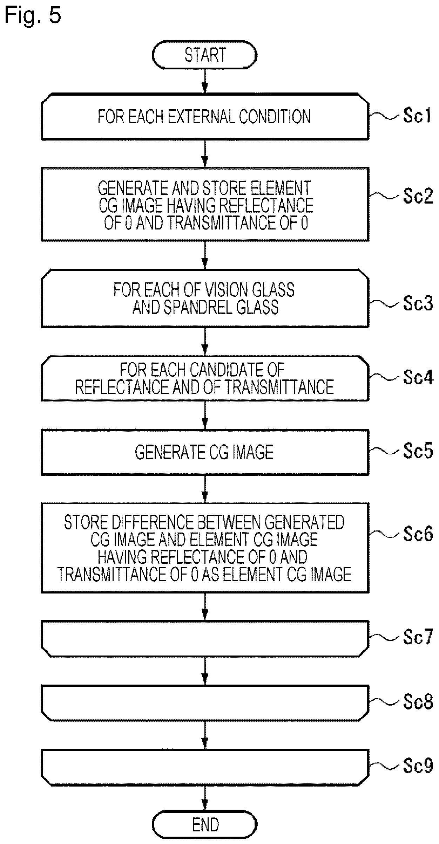

Fig. 5 is a flowchart illustrating generation processing for element CG images executed by the ray tracing processor 131 in the embodiment. The flowchart of Fig. 5 corresponds to step Sa2 in Fig. 2. The ray tracing processor 131 executes steps Sc2 through Sc8 for each of the multiple external conditions set by the condition setter 101 (steps Sc1 and Sc9). In step Sc2, by using ray tracing, the ray tracing processor 131 generates a CG image of a building including vision glass and spandrel glass having a reflectance of 0 and a transmittance of 0 and sets this CG image to the element CG image having a reflectance of 0 and a transmittance of 0. When generating this CG image, the ray tracing processor 131 uses the corresponding external condition. For example, the position of the sun and the color of the sky are determined based on the date or season, the time or time span, and the construction site which form the external condition.

Then, the ray tracing processor 131 executes steps Sc4 through Sc7 for each of the vision glass and the spandrel glass (steps Sc3 and Sc8). In step Sc4, the ray tracing processor 131 executes steps Sc5 and Sc6 for each candidate of the reflectance and the transmittance to be used for an element CG image. In step Sc5, by using the corresponding external condition, the ray tracing processor 131 uses the values of the candidate of the reflectance and the transmittance as the reflectance and the transmittance of a corresponding one of the vision glass and the spandrel glass, and generates a CG image of the building by using ray tracing. At this time, the ray tracing processor 131 sets the reflectance and the transmittance of the other one of the vision glass and the spandrel glass to 0.

Then, in step Sc6, the ray tracing processor 131 stores the difference between the CG image generated in step Sc5 and the element CG image having a reflectance of 0 and a transmittance of 0 in the element CG image storage 132 as an element CG image. Regarding the difference between the generated CG image and the element CG image having a reflectance of 0 and a transmittance of 0, the ray tracing processor 131 subtracts the value of each of the pixels of the element CG image having a reflectance of 0 and a transmittance of 0 from the value of the corresponding pixel of the generated CG image. The ray tracing processor 131 then sets the above-calculated values to be the values of the corresponding pixels of the element CG image. The pixel value may be the value corresponding to the wavelength of each of the three colors of R (red), G (green), and B (blue). Alternatively, a frequency band including the visible light region may be divided into more than three regions, and the pixel value may be the value corresponding to the wavelength of each of these regions.

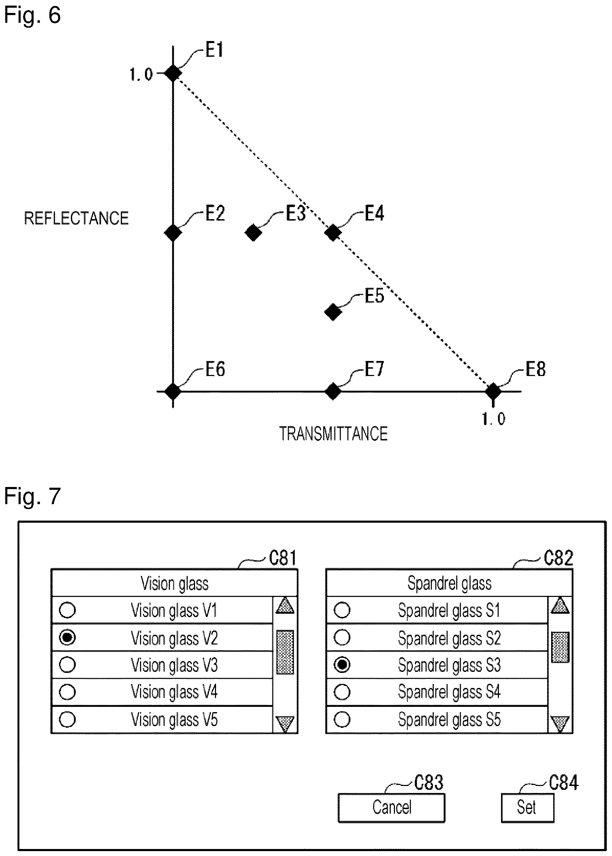

Fig. 6 is a graph illustrating candidates of the reflectance and the transmittance for element CG images in the embodiment. In Fig. 6, the horizontal axis indicates the transmittance, and the vertical axis indicates the reflectance. The rhombuses E1 through E8 plotted in Fig. 6 represent candidates of the reflectance and the transmittance for element CG images. Each of the reflectance and the transmittance of actual glass has a different spectral distribution depending on the wavelength. However, element CG images are generated, assuming that each of the reflectance and the transmittance has the same value regardless of the wavelength. The sum of the reflectance and the transmittance of glass is 1 or smaller, and the candidates of the reflectance and the transmittance are thus positioned only on the lower left side of the dotted line in Fig. 6.

The rhombus E6 plotted at the origin of the graph in Fig. 6 corresponds to the element CG image having a reflectance of 0 and a transmittance of 0. The element CG image having a reflectance of 0 and a transmittance of 0 is the element CG image generated by setting the reflectance and the transmittance of both of the vision glass and the spandrel glass to 0. The other rhombuses E1 through E5, E7, and E8 are used as follows. For an element CG image of the vision glass, one of the candidates positioned at the rhombuses E1 through E5, E7, and E8 is used as the reflectance and the transmittance of the vision glass, while the reflectance and the transmittance of the spandrel glass are set to 0. Conversely, for an element CG image of the spandrel glass, one of the candidates positioned at the rhombuses E1 through E5, E7, and E8 is used as the reflectance and the transmittance of the spandrel glass, while the reflectance and the transmittance of the vision glass are set to 0.

In the embodiment, the same candidates of the reflectance and the transmittance are used for element CG images of the vision glass and those of the spandrel glass. However, different candidates of the reflectance and the transmittance may be used for the vision glass and for the spandrel glass. Regarding the number of candidates of the reflectance and the transmittance, three or more candidates including a reflectance of 0 and a transmittance of 0 are preferably used.

Fig. 7 is a schematic view illustrating an example of a glass setting screen in the embodiment. Setting of the glass in the screen example in the schematic view of Fig. 7 corresponds to step Sa3 in Fig. 2. In Fig. 7, a list C81 is a list of options for the glass type to be used as vision glass. A list C82 is a list of options for the glass type to be used as spandrel glass. Radio buttons are provided for the individual options in the lists C81 and C82. The operator can mark radio buttons. The operator can mark only one of the options in each of the lists C81 and C82. A button C83 is a cancel button. A button C84 is a setting button. When the button C84, which is the setting button, is pressed, the option marked in the list C81 and that in the list C82 are selected as the type of glass to be used as the vision glass and that as the spandrel glass. It may be possible to check whether one of the radio buttons in each of the lists C81 and C82 is marked when the button C84 is pressed.

If options for the material, color, and surface texture of the spandrel panel are also set, the glass setting screen in Fig. 7 may include a list of options for each of the material, color, and surface texture of the spandrel panel.

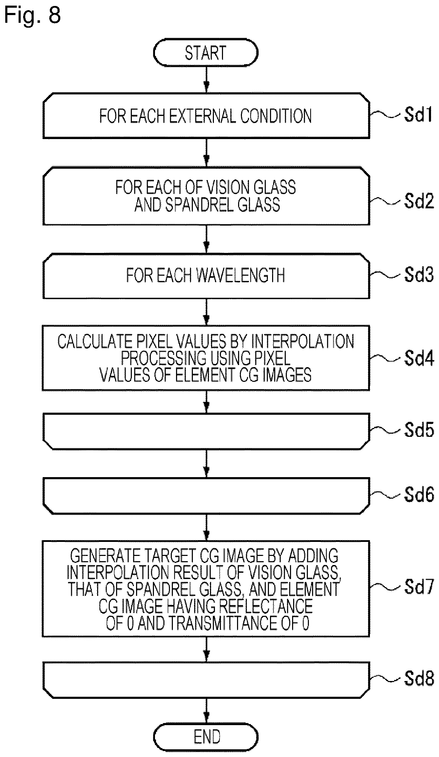

Fig. 8 is a flowchart illustrating target CG image synthesizing processing executed by the synthesizer 133 in the embodiment. The flowchart of Fig. 8 corresponds to step Sa4 in Fig. 2. The synthesizer 133 executes steps Sd2 through Sd7 (steps Sd1 and Sd8) for each of the multiple external conditions set by the condition setter 101. The synthesizer 133 also executes steps Sd3 through Sd5 (steps Sd2 and Sd6) for each of the vision glass and the spandrel glass. The synthesizer 133 also executes step Sd4 for each of the wavelengths of the pixel values (steps Sd3 and Sd5). In step Sd4, for all the pixels, the synthesizer 133 calculates the pixel value of a corresponding wavelength by performing interpolation processing using the pixel values of the element CG images stored in the element CG image storage 132. In the element CG image, the values of the reflectance and the transmittance are independent of the wavelength. However, each of glass used as the vision glass and that as the spandrel glass has a reflectance value and a transmittance value in accordance with the wavelength. That is, each of the glass used as the vision glass and that as the spandrel glass has a spectral distribution of each of the reflectance and the transmittance.

When executing processing for the vision glass, the synthesizer 133 calculates the pixel values of the glass selected as the vision glass by performing interpolation processing, more specifically, the synthesizer 133 calculates a pixel value positioned at a combination of the reflectance and the transmittance of a corresponding wavelength by performing interpolation processing by using at least three element CG images selected from a group of the element CG images of the vision glass and the element CG image having a reflectance of 0 and a transmittance of 0. When executing processing for the spandrel glass, the synthesizer 133 calculates the pixel values of the glass selected as the spandrel glass by performing interpolation processing, more specifically, the synthesizer 133 calculates a pixel value positioned at a combination of the reflectance and the transmittance of a corresponding wavelength by performing interpolation processing by using at least three element CG images selected from a group of the element CG images of the spandrel glass and the element CG image having a reflectance of 0 and a transmittance of 0. The interpolation processing performed for the vision glass and that for the spandrel glass may be linear interpolation or may be higher-order interpolation.

After a loop of steps Sd2 to Sd6, the synthesizer 133 adds the interpolation result of the vision glass, that of the spandrel glass, and the element CG image having a reflectance of 0 and a transmittance of 0 so as to generate a target CG image (step Sd7). Adding the interpolation result of the vision glass, that of the spandrel glass, and the element CG image having a reflectance of 0 and a transmittance of 0 means adding the pixel values of the same wavelength positioned at the same pixel position of these three components. In the interpolation result of the vision glass, the vision glass has pixel values as a result of performing interpolation processing, but the pixel values of the portions other than the vision glass are basically 0 even after performing interpolation processing. Likewise, in the interpolation result of the spandrel glass, the vision glass has pixel values as a result of performing interpolation processing, but the pixel values of the portions other than the vision glass are basically 0 even after performing interpolation processing. In the element CG image having a reflectance of 0 and a transmittance of 0, the pixel values of the vision glass and those of the spandrel glass are basically 0, and the other portions have pixel values. As a result of adding these three components, a CG image including the vision glass, spandrel glass, and other portions all having pixel values can be synthesized.

When generating a target CG image, the synthesizer 133 adds the element CG image having a reflectance of 0 and a transmittance of 0 so as to present it to the operator and the like. However, when generating a target CG image, the synthesizer 133 may omit the addition of the element CG image having a reflectance of 0 and a transmittance of 0. In such a case, for a target CG image that is determined to be "pass" by the determiner 104, the synthesizer 133 may add the element CG image having a reflectance of 0 and a transmittance of 0 so as to present it to the operator and the like.

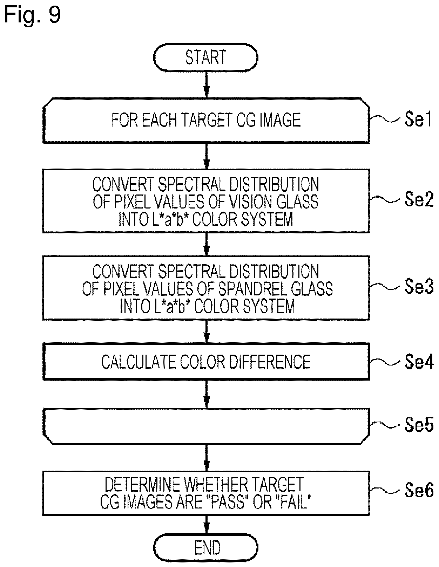

Fig. 9 is a flowchart illustrating color difference suitability determining processing executed by the determiner 104 in the embodiment. The flowchart of Fig. 9 corresponds to step Sa5 in Fig. 2. The determiner 104 executes steps Se2 through Se4 for each target CG image (steps Se1 and Se5). In step Se2, the determiner 104 converts the spectral distribution of the pixel values of the vision glass in a corresponding target CG image into pixel values in an L*a*b* color system. When converting the spectral distribution of the vision glass, the operator may specify the vision glass in the target CG image or the determiner 104 may determine the vision glass by using the interpolation result of the vision glass described in Fig. 9.

Then, the determiner 104 converts the spectral distribution of the pixel values of the spandrel glass in the corresponding target CG image into pixel values in the L*a*b* color system (step Se3). When converting the spectral distribution of the spandrel glass, the operator may specify the spandrel glass in the target CG image or the determiner 104 may determine the spandrel glass by using the interpolation result of the spandrel glass discussed in Fig. 9.

Then, the determiner 104 calculates the color difference between the conversion result in step Se2 and that in step Se3. The color difference is a value indicating the Euclidean distance in the L*a*b* coordinate system. For example, if the conversion result of step Se2 is [L1, a1, b1] and the conversion result of step Se3 is [L2, a2, b2], the color difference is represented by ((L1-L2)² + (a1-a2)² + (b1-b2)²)^{1/2}. After executing steps Se2 through Se4 for all the target CG images, the determiner 104 determines whether the target CG images are "pass" or "fail" (Se6).

In this pass/fail determination, if all the color differences calculated in step Se4 are smaller than or equal to a predetermined threshold, the determiner 104 may determine that the result is "pass", while, in the other cases, the determiner 104 may determine that the result is "fail". Alternatively, among the color differences calculated in step Se4, if the ratio of the color differences that are smaller than or equal to the predetermined threshold to those that exceed the predetermined threshold is a certain ratio or higher, the determiner 104 may determine that the result is "pass", while, in the other cases, the determiner 104 may determine that the result is "fail". The threshold used for the pass/fail determination may be included in an external condition for a target CG image to be subjected to the color difference determination. For example, the threshold may be determined based on the construction site or based on any of the season, date, time, and time span.

In the above-described embodiment, one of the vision glass and the spandrel glass may be determined in advance and the other one of the vision glass and the spandrel glass may be selected from multiple options. In this case, element CG images are generated and target CG images are synthesized only for the vision glass or the spandrel glass which is selected from the multiple options. The vision glass or the spandrel glass that is determined in advance may be included in the element CG image having a reflectance of 0 and a transmittance of 0.

As described above, the glass matching determination device 100 includes a condition setter 101, a CG image generator 103, and a determiner 104. The condition setter 101 sets an external condition to be used for generating each of multiple target computer graphics (CG) images of a building including vision glass and spandrel glass. The CG image generator 103 generates multiple target CG images. The determiner 104 determines the suitability of a combination of vision glass and spandrel glass based on the color difference between the vision glass and the spandrel glass in each of the multiple target CG images. The multiple target CG images include a first target CG image and a second target CG image. The external condition for the first target CG image is set so that the vision glass and the spandrel glass in the first target CG image are exposed to direct sunlight. The external condition for the second target CG image is set so that the vision glass and the spandrel glass in the second target CG image are not exposed to direct sunlight.

The color tone of vision glass and that of spandrel glass become different depending on whether or not they are exposed to direct sunlight. With the above-described configuration, it is possible to select vision glass and spandrel glass that can achieve color matching therebetween in both situations where they are exposed to direct sunlight and where they are not exposed to direct sunlight.

In the above-described embodiment, the multiple target CG images may include a first target CG image, a second target CG image, and a third target CG image. The external condition for the first target CG image is set so that the vision glass and the spandrel glass in the first target CG image are exposed to direct sunlight. The external condition for the second target CG image is set so that the vision glass and the spandrel glass in the second target CG image are not exposed to direct sunlight due to cloudy weather. The external condition for the third target CG image is set so that the vision glass and the spandrel glass in the third target CG image are not exposed to direct sunlight in spite of sunny weather. In this case, unlike the example shown in Fig. 4, the setting screen for the external conditions includes three lists, that is, a list for options with direct sunlight, a list for options without direct sunlight due to cloudy weather, and a list for options without direct sunlight in spite of sunny weather. Additionally, in the flowchart of Fig. 3, in step Sb4, an external condition to be used is set from the options without direct sunlight due to cloudy weather, and in a step to be added after step Sb4, an external condition to be used is set from the options without direct sunlight in spite of sunny weather. Steps Sb3 and Sb4 and the step to be added may be executed in any order.

The glass matching determination device 100 in Fig. 1 may be implemented by recording a program for implementing the functions of the glass matching determination device 100 in a computer-readable recording medium and by causing a computer system to read the program recorded in the recording medium and to execute the program. "Computer system" includes an OS and hardware, such as peripheral devices.

"Computer-readable recording medium" is a portable medium, such as a flexible disk, a magneto-optical disc, a ROM, and a CD-ROM, or a storage device, such as a hard disk built in the computer system. "Computer-readable recording medium" includes a medium that dynamically stores the program for a short period of time, for example, a communication line used for transmitting the program via a network, such as the internet, or a communication circuit, such as a telephone line, and also includes a device that stores the program for a certain period of time, such as a volatile memory within a computer system, which serves as a server or a client when the program is transmitted through a network or a communication circuit. The above-described program may be used for implementing some of the above-described functions, or may be used for implementing the above-described functions, together with a program which has already been recorded in a computer system.

Some or all of the functional blocks of the above-described glass matching determination device 100 in Fig. 1 may be individually formed into chips, or all or some of the functional blocks may be integrated into a chip. In this case, the functional blocks may not necessarily be integrated by LSI, but they may be integrated by using a dedicated circuit or a general-purpose processor. The integrated circuit may be a hybrid circuit or a monolithic circuit. Some of the functions may be implemented by hardware and some of the functions may be implemented by software.

Due to the progress of semiconductor technologies, if a circuit integration technology which replaces an LSI technology is developed, an integrated circuit formed by such a technology may be used.

While the embodiment of the present invention has been described in detail with reference to the drawings, it should be understood that the specific configuration is not limited to the disclosed embodiment, and design changes, etc. within the scope of this invention are included in the present invention.

The entire disclosure of Japanese Patent Application No. 2022-071546, filed on April 25, 2022, including the specification, claims, drawings and summary is incorporated herein by reference in its entirety.

### REFERENCE SYMBOLS

- 100: glass matching determination device
- 101: condition setter
- 102: glass selector
- 103: CG image generator
- 104: determiner
- 131: ray tracing processor
- 132: element CG image storage
- 133: synthesizer

## Claims

1. A glass matching determination device comprising:
a condition setter that sets an external condition to be used for generating each of multiple target computer graphics (CG) images of a building including vision glass and spandrel glass, the multiple target CG images being used for determining whether the vision glass and the spandrel glass match each other;
a CG image generator that generates the multiple target CG images; and
a determiner that determines, based on a color difference between the vision glass and the spandrel glass in each of the multiple target CG images, whether a combination of the vision glass and the spandrel glass is suitable, wherein
the multiple target CG images include a first target CG image and a second target CG image,
an external condition for the first target CG image is set so that the vision glass and the spandrel glass in the first target CG image are exposed to direct sunlight, and
an external condition for the second target CG image is set so that the vision glass and the spandrel glass in the second target CG image are not exposed to direct sunlight.

2. The glass matching determination device according to Claim 1, wherein:
the external condition for the second target CG image is set so that the vision glass and the spandrel glass in the second target CG image are not exposed to direct sunlight due to cloudy weather;
the multiple target CG images further include a third target CG image; and
the external condition for the third target CG image is set so that weather is sunny and the vision glass and the spandrel glass in the third target CG image are not exposed to direct sunlight.

3. The glass matching determination device according to Claim 1 or 2, wherein:
components of the external condition include at least one of a construction site of the building, time, season, date, weather, and viewpoint; and
the condition setter sets the time, season, date, or weather forming the external condition in accordance with a latitude or a region where the building will be or is being constructed.

4. The glass matching determination device according to Claim 1, wherein:
the CG image generator includes
a ray tracing processor that generates multiple CG images of the building by using ray tracing, and
a synthesizer that synthesizes, by using the multiple CG images, the multiple target CG images corresponding to transmittance and reflectance of selected vision glass and corresponding to transmittance and reflectance of selected spandrel glass;
the multiple CG images include at least two CG images, the transmittance of the vision glass or the spandrel glass in each of the at least two CG images being different from the transmittance of the vision glass or the spandrel glass in another one of the at least two CG images; and
the multiple CG images include at least two CG images, the reflectance of the vision glass or the spandrel glass in each of the at least two CG images being different from the reflectance of the vision glass or the spandrel glass in another one of the at least two CG images.

5. A glass matching determination method used by a glass matching determination device, comprising:
setting an external condition to be used for generating each of multiple target computer graphics (CG) images of a building including vision glass and spandrel glass, the multiple target CG images being used for determining whether the vision glass and the spandrel glass match each other;
generating the multiple target CG images; and
determining, based on a color difference between the vision glass and the spandrel glass in each of the multiple target CG images, whether a combination of the vision glass and the spandrel glass is suitable, wherein
the multiple target CG images include a first target CG image and a second target CG image,
an external condition for the first target CG image is set so that the vision glass and the spandrel glass in the first target CG image are exposed to direct sunlight, and
an external condition for the second target CG image is set so that the vision glass and the spandrel glass in the second target CG image are not exposed to direct sunlight.

6. A program causing a computer to function as:
a condition setter that sets an external condition to be used for generating each of multiple target computer graphics (CG) images of a building including vision glass and spandrel glass, the multiple target CG images being used for determining whether the vision glass and the spandrel glass match each other;
a CG image generator that generates the multiple target CG images; and
a determiner that determines, based on a color difference between the vision glass and the spandrel glass in each of the multiple target CG images, whether a combination of the vision glass and the spandrel glass is suitable, wherein
the multiple target CG images include a first target CG image and a second target CG image,
an external condition for the first target CG image is set so that the vision glass and the spandrel glass in the first target CG image are exposed to direct sunlight, and
an external condition for the second target CG image is set so that the vision glass and the spandrel glass in the second target CG image are not exposed to direct sunlight.

7. A computer-readable recording medium storing the program as defined in Claim 6.
